# EUROPEAN PATENT APPLICATION

(11) **EP 3 290 645 A1**
(43) Date of publication of application: **07.03.2018**
(21) Application number: 17173883.4
(22) Date of filing: 01.06.2017
(51) Int. Cl.: F01D 11/00, F01D 11/12, F01D 11/18

(54) **SEGMENT FOR SEALING DEVICE, TURBINE ROTOR AND TURBINE COMPRISING SAME**

(30) Priority: 30.08.2016 JP 2016168054
(71) Applicant: Mitsubishi Hitachi Power Systems, Ltd., Nishi-ku Yokohama 220-8401 (JP)
(72) Inventor: OIKAWA, Shinji, Yokohama, 220-8401 (JP)
(74) Representative: Strehl Schübel-Hopf & Partner

(57) **Abstract**

A segment (31) for a sealing device according to the present invention is used in a sealing device (28) provided between a turbine rotor (12) and a stationary body (14) that covers the turbine rotor (12). The segment (31) for the sealing device is characterized by including a base (32) that engages with the turbine rotor (12) and a free-cutting layer (34) that covers a stationary body opposed surface (37), which is a surface of the base (32) opposed to the stationary body (14).

## Description

### BACKGROUND OF THE INVENTION

### FIELD OF THE INVENTION

The present invention relates to a segment for a sealing device and a turbine rotor and a turbine comprising the same.

### [Background Art]

In a turbine, there is a gap between a turbine rotor, which is a rotating body, and a stationary body that covers the turbine rotor. A part of working fluid can pass the gap. A flow that passes the gap between the turbine rotor and the stationary body opposed to the turbine rotor without passing a blade section (a profile section) of a moving blade of the turbine rotor in this way is described as leakage flow in this specification. The leakage flow is sometimes suppressed by providing seal fins on opposed surfaces of the turbine rotor and the stationary body.

In the case explained above, the leakage flow can be suppressed more as very small gaps present between the distal ends of the seal fins and sections opposed to the distal ends are set smaller. However, if the very small gaps are set too small, it is likely that the seal fins come into contact with the oppose surfaces to be, for example, damaged because of thermal deformation or the like. As measures against this problem, a configuration has been proposed in which a sealing device including an abradable layer made of an abradable material (a free-cutting material) excellent in machinability is provided on a surface opposed to the seal fins to suppress the damage or the like of the seal fins (see JP-A-2013-122227 and the like).

### SUMMARY OF THE INVENTION

However, when the abradable material is thermally sprayed to the turbine rotor as described in Patent Literature 1, it is likely that the strength of the turbine rotor is deteriorated by a heat input due to the thermal spray.

The present invention has been devised in view of the above and an object of the present invention is to provide a segment for a sealing device that can suppress strength deterioration of a turbine rotor.

In order to achieve the object, a segment for a sealing device according to the present invention is used in a sealing device provided between a turbine rotor and a stationary body that covers the turbine rotor, the segment for the sealing device characterized by including: a base that engages with the turbine rotor; and a free-cutting layer that covers a stationary body opposed surface, which is a surface of the base opposed to the stationary body.

According to the present invention, it is possible to provide a segment for a sealing device that can suppress strength deterioration of a turbine rotor.

### BRIEF DESCRIPTION OF THE DRAWINGS

- Fig. 1: is a schematic view showing an overall configuration of a configuration example of a steam turbine power generation facility applied with a sealing device according to a first embodiment of the present invention;
- Fig. 2: is a sectional view showing an internal structure of a main part of a low-pressure turbine applied with the sealing device according to the first embodiment of the present invention;
- Fig. 3: is an enlarged view of a region A surrounded by a dotted line in Fig. 2 and a schematic view showing the structure of the sealing device according to the first embodiment of the present invention;
- Fig. 4: is a diagram for explaining a method of attaching a segment to a turbine rotor according to the first embodiment of the present invention;
- Fig. 5: is a schematic view showing the structure of a sealing device according to a second embodiment of the present invention; and
- Fig. 6: is a schematic view showing an overall configuration of a configuration example of a gas turbine power generation facility.

### DESCRIPTION OF THE PREFERRED EMBODIMENTS

### <First Embodiment>

### (Configuration)

### 1. Steam turbine power generation facility

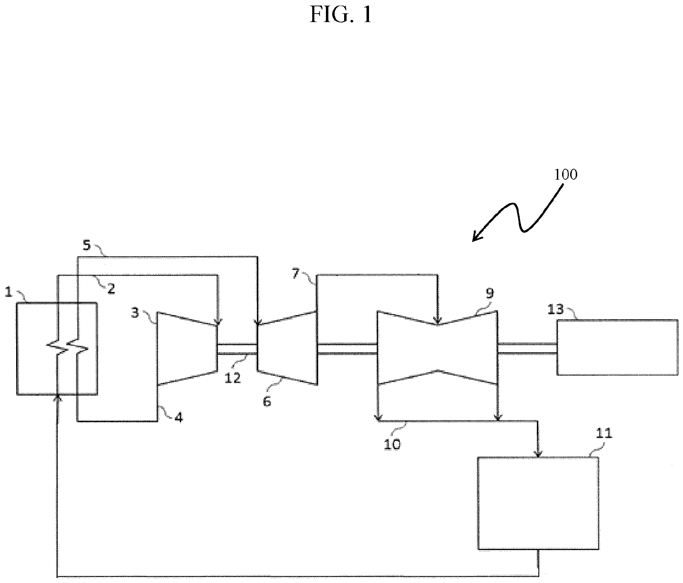

Fig. 1 is a schematic view showing an overall configuration of a configuration example of a steam turbine power generation facility applied with a sealing device according to this embodiment. In the following explanation, the sealing device according to this embodiment is applied to the steam turbine power generation facility.

As shown in Fig. 1, a steam turbine power generation facility 100 includes a steam generation source 1, a high-pressure turbine 3, an intermediate-pressure turbine 6, a low-pressure turbine 9, a condenser 11, and a load apparatus 13.

The steam generation source (a boiler) 1 heats condensed water supplied from the condenser 11 and generates high-temperature/high-pressure steam. The steam generated by the boiler 1 is guided to the high-pressure turbine 3 via a main steam pipe 2 and drives the high-pressure turbine 3. The steam that has driven the high-pressure turbine 3 and has been decompressed flows down in a high-pressure turbine exhaust pipe 4 and is guided to the boiler 1 and heated again to be reheated steam.

The reheated steam heated by the boiler 1 is guided to the intermediate-pressure turbine 6 via a reheating steam pipe 5 and drives the intermediate-pressure turbine 6. The steam that has driven the intermediate-pressure turbine 6 and has been decompressed is guided to the low-pressure turbine 9 via an intermediate-pressure turbine exhaust pipe 7 and drives the low-pressure turbine 9. The steam that has driven the low-pressure turbine 9 and has been decompressed flows in a diffuser 10 and is guided to the condenser 11. The condenser 11 includes a cooling water pipe (not shown in the figure). The condenser 11 causes the steam guided to the condenser 11 and cooling water flowing in the cooling water pipe to perform heat exchange and condenses the steam. The condensed water generated by the condenser 11 is sent to the boiler 1 again.

The high-pressure turbine 3, the intermediate-pressure turbine 6, and the low-pressure turbine 9 are coupled on the same axis by a turbine rotor 12. The load apparatus (in this embodiment, a generator) 13 is coupled to the turbine rotor 12. The generator 13 is driven by rotation power of the high-pressure turbine 3, the intermediate-pressure turbine 6, and the low-pressure turbine 9. The rotation power of the high-pressure turbine 3, the intermediate-pressure turbine 6, and the low-pressure turbine 9 is converted into electric power.

In this embodiment, the configuration is illustrated in which the coupled high-pressure turbine 3, intermediate-pressure turbine 6, and low-pressure turbine 9 drive the generator 13. However, a configuration may be adopted in which the high-pressure turbine 3, the intermediate-pressure turbine 6, and the low-pressure turbine 9 respectively drive generators and individually convert rotation power into electric power or a configuration may be adopted in which a turbine obtained by coupling any two of the high-pressure turbine 3, the intermediate-pressure turbine 6, and the low-pressure turbine 9 drives a generator and converts rotation power into electric power. The configuration including the high-pressure turbine 3, the intermediate-pressure turbine 6, and the low-pressure turbine 9 is illustrated. However, a configuration excluding the intermediate-pressure turbine 6 and including the high-pressure turbine 3 and the low-pressure turbine 9 may be adopted. Further, the configuration including the boiler as the steam generation source 1 is illustrated. However, a configuration including a gas turbine as the steam generation source 1 may be adopted. That is, the steam gas turbine facility may be a combined cycle power generation facility.

### 2. Steam turbine

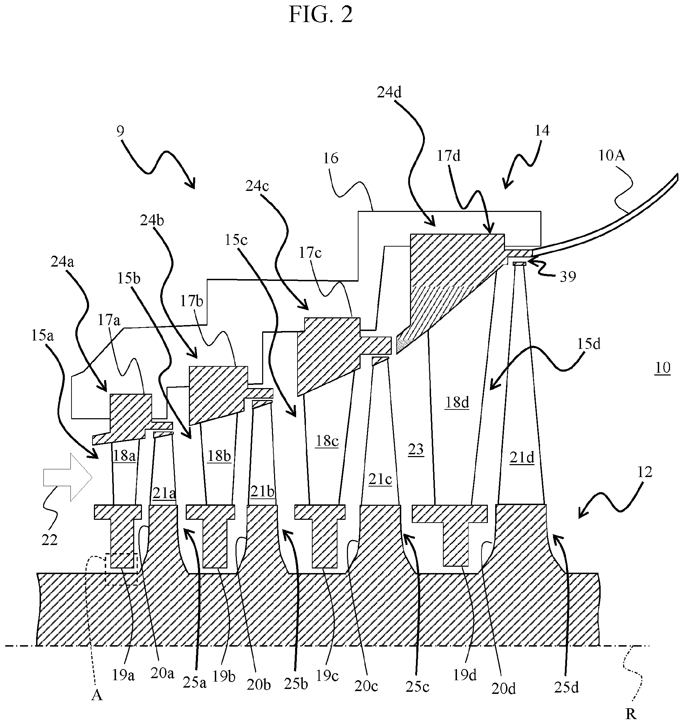

Fig. 2 is a sectional view showing the internal structure of a main part of the low-pressure turbine 9 applied with the sealing device according to this embodiment. As shown in Fig. 2, the low-pressure turbine 9 includes the turbine rotor 12 and a stationary body 14 that covers the turbine rotor 12. The diffuser 10 is connected to an outlet side (a most downstream side) of working fluid 22 of the stationary body 14. Note that, in this specification, a rotating direction and a rotation axis direction of the turbine rotor 12 are simply referred to as "rotating direction" and "rotation axis direction" and a radial direction inner side and a radial direction outer side of the turbine rotor 12 are simply referred to as "radial direction inner side" and "radial direction outer side".

The stationary body 14 includes a casing 16, outer diaphragms 17a to 17d, stationary blades 18a to 18d, and inner diaphragms 19a to 19d.

The casing 16 is a cylindrical member that forms the outer circumferential wall of the low-pressure turbine 9. The outer diaphragms 17a to 17d, the stationary blades 18a to 18d, the inner diaphragms 19a to 19d, and the turbine rotor 12 are housed in the casing 16.

The outer diaphragms 17a to 17d are supported on the inner circumferential surface of the casing 16. The outer diaphragms 17a to 17d are cylindrical members extending in the rotating direction. The outer diaphragms 17a to 17d are formed such that the inner circumferential surfaces thereof spread to the radial direction outer side toward a downstream side. An outer circumferential wall 10A of the diffuser 10 is connected to the end portion on the downstream side of the outer diaphragm 17d provided on the most downstream side among the outer diaphragms 17a to 17d. Note that, in this embodiment, the configuration is illustrated in which the outer diaphragms 17a to 17d are respectively supported on the inner circumferential surface of the casing 16. However, a configuration may be adopted in which the outer diaphragms 17a to 17d are integrally formed and supported on the inner circumferential surface of the casing 16.

The stationary blades 18a to 18d are provided in plurality at equal intervals along the rotating direction on the inner circumferential surfaces of the outer diaphragms 17a to 17d. The stationary blades 18a to 18d are provided to extend from the inner circumferential surfaces of the outer diaphragms 17a to 17d toward the radial direction inner side.

The inner diaphragms 19a to 19d are provided on the radial direction inner side of the outer diaphragms 17a to 17d. The inner diaphragms 19a to 19d are cylindrical members extending in the rotating direction. The stationary blades 18a to 18d are connected to the outer circumferential surfaces of the inner diaphragms 19a to 19d. That is, the stationary blades 18a to 18d are fixed between the outer diaphragms 17a to 17d and the inner diaphragms 19a to 19d.

The outer diaphragms 17a to 17d, the stationary blades 18a to 18d, and the inner diaphragms 19a to 19d configure stationary blade rows (stationary blade rings) in the rotation axis direction from the inlet side of the working fluid 22 of the stationary body 14. In this embodiment, the outer diaphragm 17a, the stationary blade 18a, and the inner diaphragm 19a configure a stationary blade row 15a at a first stage (an initial stage), the outer diaphragm 17b, the stationary blade 18b, and the inner diaphragm 19b configure a stationary blade row 15b at a second stage, the outer diaphragm 17c, the stationary blade 18c, and the inner diaphragm 19c configure a stationary blade row 15c at a third stage, and the outer diaphragm 17d, the stationary blade 18d, and the inner diaphragm 19d configure a stationary blade row 15d at a fourth stage (a last stage).

An annular space formed between the inner diaphragms 19a to 19d and platforms provided in root sections (portions in the radial direction inner side) of moving blades 21a to 21d and the outer diaphragms 17a to 17d and covers provided at distal end portions (portions on the radial direction outer side) of the moving blades 21a to 21d configures a channel (an annular channel) 23 in which the working fluid 22 flows. The inner circumferential wall of the annular channel 23 is formed by the outer circumferential surfaces of the inner diaphragms 19a to 19d and the outer circumferential surfaces of the platforms of the moving blades 21a to 21d. The outer circumferential wall of the annular channel 23 is formed by the inner circumferential surfaces of the outer diaphragms 17a to 17d and surfaces facing the radial direction inner side of the covers.

The turbine rotor 12 includes rotor disks 20a to 20d and the moving blades 21a to 21d.

The rotor disks 20a to 20d are disk-like members disposed side by side in the rotation axis direction. The rotor disks 20a to 20d are sometimes alternately superimposed with spacers (not shown in the figure).

The moving blades 21a to 21d are respectively provided on the outer circumferential surfaces of the rotor disks 20a to 20d in plurality at equal intervals along the rotating direction. The moving blades 21a to 21d are provided to extend from the outer circumferential surfaces of the rotor disks 20a to 20d toward the radial direction outer side. The moving blades 21a to 21d are rotated round a rotation axis R together with the rotor disks 20a to 20d by the working fluid 22 flowing in the annular channel 23.

The rotor disks 20a to 20d and the moving blades 21a to 21d configure moving blade rows in the rotation axis direction from the inlet side of the working fluid 22 of the stationary body 14. In this embodiment, the rotor disk 20a and the moving blade 21a configure a moving blade row 25a at the first stage (the initial stage), the rotor disk 20b and the moving blade 21b configure a moving blade row 25b at the second stage, the rotor disk 20c and the moving blade 21c configure a moving blade row 25c at the third stage, and the rotor disk 20d and the moving blade 21d configure a moving blade row 25d at the fourth stage (the last stage).

The stationary blades 18a to 18d and the moving blades 21a to 21d are alternately provided in the rotation axis direction in the order of the stationary blade 18a, the moving blade 21a, the stationary blade 18b, the moving blade 21b, and the like from the inlet side (the most upstream side) of the working fluid 22 of the stationary body 14 toward the downstream side. The stationary blades 18a to 18d are disposed to be opposed to the moving blades 21a to 21d in the rotation axis direction.

From the inlet side of the working fluid 22 of the stationary body 14, one set of a stationary blade row and a moving blade row adjacent to each other in the rotation axis direction configures a blade stage. In this embodiment, the stationary blade row 15a at the initial stage and the moving blade row 25a at the initial stage configure a first blade stage 24a, the stationary blade row 15b at the second stage and the moving blade row 25b at the second stage configure a second blade stage 24b, the stationary blade row 15c at the third stage and the moving blade row 25c at the third stage configure a third blade stage 24c, and the stationary blade row 15d at the fourth stage and the moving blade row 25d at the fourth stage configure a fourth blade stage 24d. The fourth blade stage 24d is a last stage disposed on the outlet side of the working fluid 22 of the stationary body 14. The fourth blade stage 24d is disposed in a position closest to the diffuser 10. Blade lengths (lengths in the radial direction) of the moving blades 21a to 21d disposed in the first to fourth blade stages are formed to be larger in the moving blades located further on the downstream side. The blade length of the moving blade (the last-stage moving blade) 21d disposed in the fourth blade stage 24d is formed largest among the moving blades 21a to 21d.

### 3. Sealing device

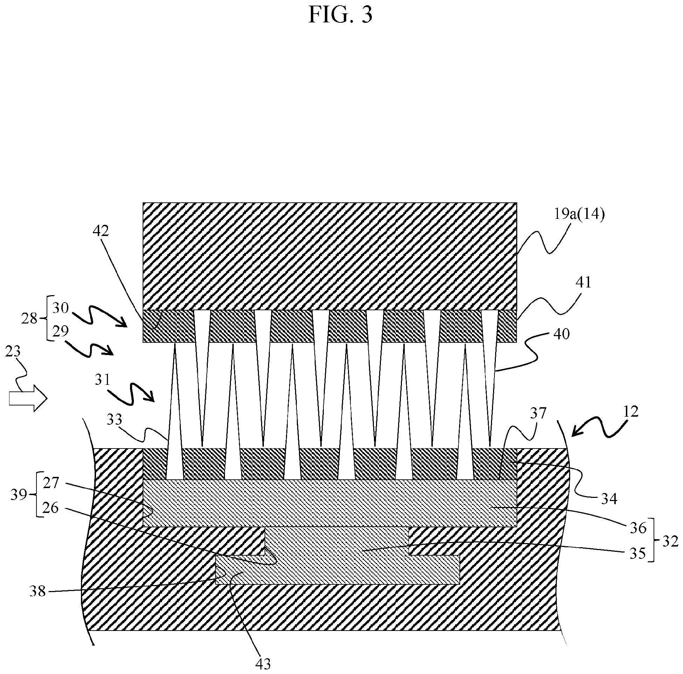

Fig. 3 is an enlarged view of a region A surrounded by a dotted line in Fig. 2 and a schematic view showing the structure of the sealing device according to this embodiment. As shown in Fig. 3, a sealing device 28 is provided in a gap present between the turbine rotor 12 and the inner diaphragm 19a. The sealing device 28 suppresses a leakage flow 23, which is a part of the working fluid 22 (see Fig. 2), from passing the gap. The sealing device 28 includes an inner sealing device 29 and an outer sealing device 30. The sealing device 28 is configured by causing the inner sealing device 29 and the outer sealing device 30 to face in the radial direction. Note that, in this embodiment, as illustrated below, the sealing device 28 is provided in the gap present between the turbine rotor 12 and the inner diaphragm 19a. However, the same applies when the sealing device 28 is provided in a portion into which the leakage flow 23 can flow such as gaps present between the turbine rotor 12 and the other inner diaphragms 19b to 19d and a gap present between the cover provided at the moving blade distal end portion and the stationary body opposed to the cover.

### 3-1. Inner sealing device

The inner sealing device 29 is a sealing device provided in the outer circumferential section of the turbine rotor 12. The inner sealing device 29 includes a plurality of segments for a sealing device (segments) 31 provided along the rotating direction in the outer circumferential section of the turbine rotor 12. In this embodiment, the plurality of segments 31 are provided such that the segments 31 adjacent to each other in the rotating direction are in contact (joined) with each other. With such a configuration, when the segments 31 are assembled to the turbine rotor 12, when viewed from the rotation axis direction, the inner sealing device 29 is formed in an annular shape (a ring shape). The segment 31 includes a base 32, seal fins 33, and a free-cutting layer 34.

### Base

The base 32 engages with a groove section 39 formed along the rotating direction in the outer circumferential section of the turbine rotor 12 and fixes the segment 31 to the turbine rotor 12 to provide the free-cutting layer 34 in the turbine rotor 12. As shown in Fig. 3, the groove section 39 includes a first groove section 26 and a second groove section 27. The first groove section 26 is a space configuring a portion on the radial direction inner side of the groove section 39. In this embodiment, the first groove section 26 is formed in a reverse T shape (a convex shape to the radial direction outer side) when viewed on a cut surface of the turbine rooter 12 cut along a plane including the rotation axis R (hereinafter, cut surface of the turbine rotor 12). The first groove section 26 includes a housing section 38 capable of housing a projecting section included in an engaging section 35 (explained below) of the base 32. The second groove section 27 is a space configuring a portion on the radial direction outer side of the groove section 39. The second groove section 27 spatially communicates with the first groove section 26. In this embodiment, the second groove section 27 is formed in a rectangular shape when viewed on the cut surface of the turbine rotor 12.

The base 32 includes the engaging section 35 and a supporting section 36. The engaging section 35 configures a portion on the radial direction inner side of the base 32. In this embodiment, when the segment 31 is provided in the turbine rotor 12, the engaging section 35 is formed in a reverse T shape to be engageable in the first groove section 26 when viewed on the cut surface of the turbine rotor 12. Specifically, the engaging section 35 includes a projecting section 43 projecting in the rotation axis direction. When the segment 31 is provided in the turbine rotor 12, when viewed on the cut surface of the turbine rotor 12, the projecting section 43 is housed (fit) in the housing section 38 of the first groove section 26 and the surface on the radial direction outer side of the projecting section 43 and the surface on the radial direction outer side of the housing section 38 come into contact with each other, whereby the segment 31 is fixed to the turbine rotor 12 and restricted from being displaced in the radial direction.

The supporting section 36 configures a portion on the radial direction outer side of the base 32. The supporting section 36 is formed in a rectangular shape when viewed on the cut surface of the turbine rotor 12. When the segment 31 is provided in the turbine rotor 12, the supporting section 36 includes a surface opposed to the inner circumferential surface of the inner diaphragm 19a when viewed on the cut surface of the turbine rotor 12. In this specification, for convenience, a surface of the supporting section 36 facing the radial direction outer side and opposed to the inner circumferential surface of the inner diaphragm 19a is described as stationary body opposed surface 37.

### Seal fins

The seal fins 33 are provided on the stationary body opposed surface 37 and extend toward the inner circumferential surface of the inner diaphragm 19a. A plurality of (in this embodiment, six) seal fins 33 are provided on the stationary body opposed surface 37 at intervals in the rotation axis direction. In this embodiment, the seal fins 33 are provided such that the distal end portions (the end portions on the radial direction outer side) of the seal fins 33 have gaps with respect to a free-cutting layer 41 (explained below) of the outer sealing device 30 during the start of the low-pressure turbine 9 and come into contact with the free-cutting layer 41 during the operation of the low-pressure turbine 9.

### Free-cutting layer

The free-cutting layer 34 is a sponge-like member provided to cover the stationary body opposed surface 37. The free-cutting layer 34 suppresses damage and the like to seal fins 40 (explained below) provided on the inner circumferential surface of the inner diaphragm 19a and extending toward the stationary body opposed surface 37. In this embodiment, when the segment 31 is provided in the turbine rotor 12, the free-cutting layer 34 is provided such that the surface on the radial direction outer side of the free-cutting layer 34 is flush with the outer circumferential surface of the turbine rotor 12 when viewed on the cut surface of the turbine rotor 12. For example, the free-cutting layer 34 is formed by mixing metal powder and polyester powder. Note that, in the configuration illustrated in Fig. 3, the free-cutting layer 34 is provided to cover a portion excluding the seal fins 33 on the stationary body opposed surface 37.

### 3-2. Outer sealing device

The outer sealing device 30 is a sealing device provided on a surface opposed to the stationary body opposed surface 37 on the inner circumferential surface of the inner diaphragm 19a. In this specification, for convenience, the surface opposed to the stationary body opposed surface 37 on the inner circumferential surface of the inner diaphragm 19a is described as segment opposed surface 42. The outer sealing device 30 includes the seal fins 40 and the free-cutting layer 41.

The seal fins (second seal fins) 40 are provided on the segment opposed surface 42 and extend toward the free-cutting layer 34 of the segment 31. In this embodiment, the second seal fins 40 are formed of a member same as a member of the seal fins 33. A plurality of (in this embodiment, six) second seal fins 40 are provided on the segment opposed surface 42 at intervals in the rotation axis direction. The seal fins 33 and the second seal fins 40 are alternately provided in the rotation axis direction in the order of the seal fin 33, the second seal fin 40, and the like from the inlet side (the most upstream side) of the leakage flow 23 toward the downstream side. In this embodiment, the seal fins 33 are disposed to be opposed to the second seal fins 40 in the rotation axis direction. In this embodiment, the second seal fins 40 are provided such that the distal end portions (the end portions on the radial direction inner side) of the second seal fins 40 have gaps with respect to the free-cutting layer 34 of the segment 31 during the start of the low-pressure turbine 9 and come into contact with the free-cutting layer 34 during the operation of the low-pressure turbine 9.

The free-cutting layer (a second free-cutting layer) 41 is provided to cover the segment opposed surface 42. The second free-cutting layer 41 suppresses damage and the like to the seal fins 33. Note that, in the configuration illustrated in Fig. 3, the second free-cutting layer 41 is provided to cover a portion excluding the second seal fins 40 on the segment opposed surface 42.

### 4. Method of manufacturing the segment

A method of manufacturing the segment 31 is explained. Note that the method of manufacturing the segment 31 is not limited to a method explained below.

### Step 1

The seal fins 33 are attached to the stationary body opposed surface 37 of the supporting section 36. In this embodiment, the seal fins 33 are formed in a dimension obtained by expanding (thickening) a required dimension (a set value) and attached to the stationary body opposed surface 37. This is because, if the seal fins 33 are formed in the required dimension and provided on the stationary body opposed surface 37, when an abradable material is thermally sprayed to the stationary body opposed surface 37 in step 2 explained bellow, it is likely that the seal fins 33 are bent or the surfaces of the seal fins 33 are oxidized.

### Step 2

The abradable material is thermally sprayed to a surface excluding the seal fins 33 on the stationary body opposed surface 37 of the supporting section 36 to form the free-cutting layer 34. In this embodiment, as explained above, when the segment 31 is attached to the turbine rotor 12, the free-cutting layer 34 is formed at thickness of a degree in which the surface on the radial direction outer side of the free-cutting layer 34 is flush with the outer circumferential surface of the turbine rotor 12 when viewed on the cut surface of the turbine rotor 12. Note that gas thermal spray or the like can be used as the thermal spray.

### Step 3

Expanded portions of the seal fines 33 are shaved to reduce the seal fins 33 to the required dimension.

### 5. Method of attaching the segment

A method of attaching the segment 31 to the turbine rotor 12 is explained. Note that the method of attaching the segment 31 is not limited to a method explained below.

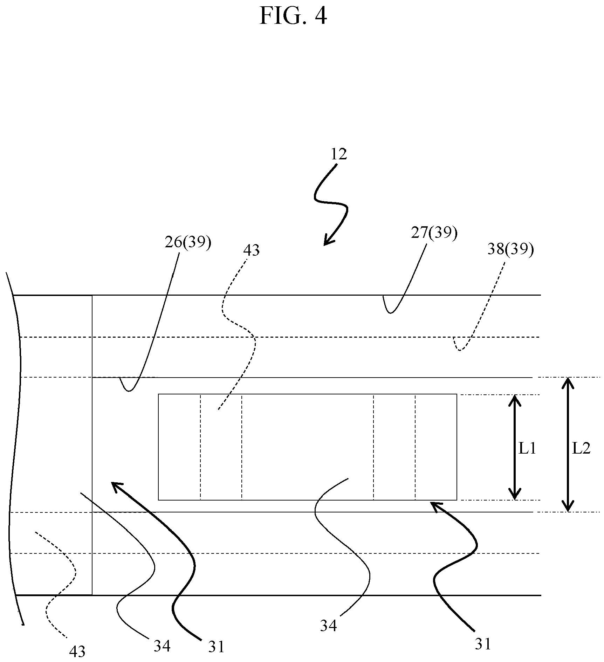

Fig. 4 is a diagram for explaining the method of attaching the segment 31 to the turbine rotor 12 according to this embodiment. In Fig. 4, the seal fins 33 are omitted. In the following explanation, as illustrated below, N segments 31 in total are attached to the groove section 39 in one row of the turbine rotor 12.

First, among the N segments 31, first to N-2-th segments 31 are inserted into the groove section 39. As shown in Fig. 4, the first to N-2-th segments 31 are inserted into the groove section 39 in a posture rotated approximately 90 degrees clockwise (hereinafter, insertion posture) from a posture shown in Fig. 3 (hereinafter, attachment posture). When the segment 31 is inserted into the groove section 39, the segment 31 is rotated counterclockwise to house (engage) the projecting section 43 in the housing section 38 of the second groove section 27. Consequently, it is possible to attach the segment 31 to the turbine rotor 12 in the attachment posture. Note that, in this embodiment, the segment 31 is formed such that length L1 in the rotation axis direction of the segment 31 is smaller than length L2 in the rotation axis direction of a portion where the length in the rotation axis direction of the groove section 39 is the smallest, that is, an inlet portion of the second groove 27 in the insertion posture of the segment 31. Therefore, when the segment 31 is inserted into the groove section 39 in the insertion posture, the segment 31 and the groove section 39 do not interfere with each other.

After the first to N-2-th segments 31 are attached to the turbine rotor 12, an N-1-th segment 31 is inserted into the groove section 39. Note that, when the N-1-th segment 31 is inserted into the groove section 39, since the distance in the rotating direction between the adj acent segments (the first segment and the N-2-th segment) is short (narrow), it is likely that the N-1-th segment 31 interferes with an adjacent segment. In this embodiment, the N-1-th segment 31 is formed in a shape insertable between adjacent segments in the attachment posture. The N-1-th segment 31 is fit between the adjacent segments and fixed to the turbine rotor 12 by pins or the like.

After the first to N-1-th segments 31 are attached to the turbine rotor 12, an N-th (last) segment 31 is inserted into the groove section 39. Note that it is also likely that the last segment 31 interferes with adjacent segments (the first segment and the N-1-th segment) when the last segment 31 is inserted into the groove section 39. Therefore, like the N-1-th segment 31, the last segment 31 is formed in a shape insertable between the adjacent segments in the attachment posture. The last segment 31 is fit in between the adjacent segments and fixed to the turbine rotor 12 by pins or the like.

### (Effects)

(1) In this embodiment, the abradable material is thermally sprayed to the stationary body opposed surface 37 of the segment 31 to form the free-cutting layer 34. The segment 31, on which the free-cutting layer 34 is formed, is attached to the turbine rotor 12 via the base 32 engageable with the turbine rotor 12. Therefore, it is possible to form the free-cutting layer 34 on the turbine rotor 12 without directly thermally spraying the abradable material on the turbine rotor 12. Therefore, when the free-cutting layer 34 is formed on the turbine rotor 12, it is possible to suppress strength deterioration of the turbine rotor 12. In addition, by attaching the segment 31 to the turbine rotor 12, it is possible to provide the free-cutting layer 34 to be opposed to the inner circumferential surface of the stationary body 14. Therefore, it is possible to elongate, in the radial direction, the second seal fins 40 extending from the stationary body 14 toward the free-cutting layer 34 (bring the second seal fins 40 closer to the free-cutting layer 34). Therefore, it is possible to further suppress the leakage flow 23 from passing the gap.
(2) In this embodiment, the projecting section 43 included in the engaging section 35 of the base 32 and the housing section 38 of the groove section 39 formed in the turbine rotor 12 are engaged to attach the segment 31 to the turbine rotor 12. Therefore, it is possible to restrict the segment 31 from being displaced in the radial direction. The displacement of the segment 31 in the rotating direction can be restricted by the segments 31 adjacent to each other. Therefore, it is possible to suppress the segment 31 from slipping off to the radial direction outer side from the groove section 39 during the rotation of the turbine rotor 12. Therefore, it is possible to further improve the reliability of the turbine rotor 12.
(3) When the abradable material is thermally sprayed to a large structure such as a turbine rotor of a low-pressure turbine, it is often difficult to thermally spray the abradable material with a conventional general facility, and a large facility is necessary. Therefore, cost could increase. On the other hand, in this embodiment, the abradable material only has to be thermally sprayed to the segments 31. Therefore, it is possible to thermally spray the abradable material with the conventional general facility. It is possible to suppress the increase in cost.
(4) In this embodiment, the plurality of segments 31 are provided along the rotating direction. Therefore, when the free-cutting layer 34 of a certain segment 31 is deteriorated over time, it is sufficient to replace only the segment 31 corresponding to the free-cutting layer 34 deteriorated over time without replacing all the segments 31. In this way, the segments 31 can be replaced in units of one segment. Therefore, it is possible to improve maintainability.

In a structure in which the abradable material is directly thermally sprayed to a turbine rotor to form a free-cutting layer, when any portion of the free-cutting layer covering the outer circumferential surface of the turbine rotor peels off from the outer circumferential surface of the turbine rotor, it is likely that the entire free-cutting layer covering the outer circumferential surface of the turbine rotor peels starting from the any portion. On the other hand, in this embodiment, the segments 31 are individually independent from one another and the free-cutting layer 34 is divided in the rotating direction. Therefore, even if any portion of the free-cutting layer 34 peels, it is possible to keep the peeling within the segment 31 corresponding to the free-cutting layer 34 and prevent the entire free-cutting layer 34 from peeling off from the turbine rotor 12 starting from the any portion. Therefore, it is possible to secure sealing performance of the turbine rotor 12.

### <Second Embodiment>

### (Configuration)

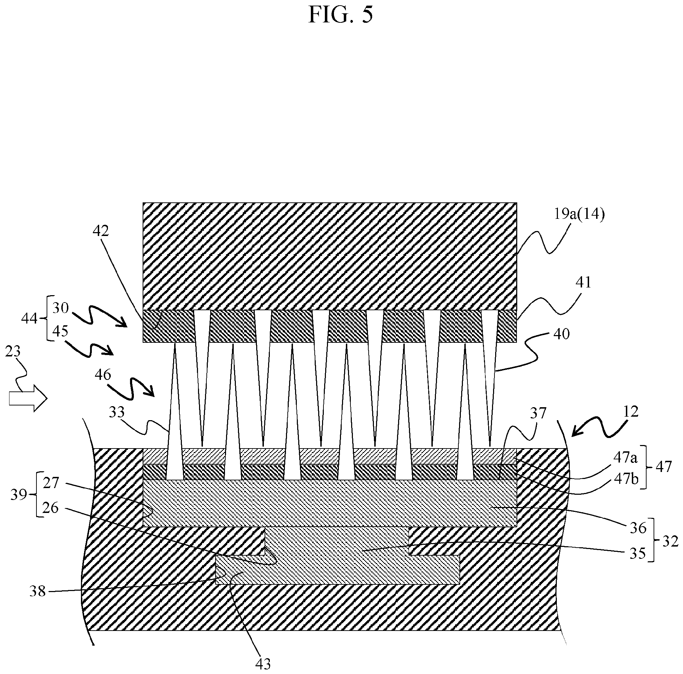

Fig. 5 is a schematic view showing the structure of a sealing device according to this embodiment. In Fig. 5, portions equivalent to the portions in the first embodiment are denoted by the same reference numerals and signs and explanation of the portions is omitted as appropriate.

A sealing device 44 according to this embodiment is different from the sealing device 28 according to the first embodiment in that a free-cutting layer 47 of a segment 46 included in an inner sealing device 45 is formed by stacking a first free-cutting layer 47a and a second free-cutting layer 47b. The other components are the same as the components of the sealing device 28 according to the first embodiment.

As shown in Fig. 5, the first free-cutting layer 47a is a layer configuring a portion on the radial direction outer side of the free-cutting layer 47. When the segment 46 is provided in the turbine rotor 12, the first free-cutting layer 47a is stacked on the radial direction outer side (the upper side) of the second free-cutting layer 47b when viewed on the cut surface of the turbine rotor 12. When the segment 46 is provided in the turbine rotor 12, the first free-cutting layer 47a is provided such that, when viewed on the cut surface of the turbine rotor 12, the surface on the radial direction outer side of the first free-cutting layer 47a faces a gap present between the turbine rotor 12 and the inner diaphragm 19a. The first free-cutting layer 47a is opposed to the segment opposed surface 42 across the gap. In this embodiment, the first free-cutting layer 47a is configured to have hardness lower than the hardness of seal fins and higher than the hardness of the free-cutting layer 34 by, for example, setting an amount of the polyester powder with respect to the metal powder small compared with the free-cutting layer 34 in the first embodiment.

The second free-cutting layer 47b is a layer configuring a portion on the radial direction inner side of the free-cutting layer 47. When the segment 46 is provided in the turbine rotor 12, the second free-cutting layer 47b is provided such that, when viewed on the cutting surface of the turbine rotor 12, the surface on the radial direction outer side of the second free-cutting layer 47b is in contact with the surface on the radial direction inner side of the first free-cutting layer 47a and the surface on the radial direction inner side of the second free-cutting layer 47b is in contact with the stationary body opposed surface 37 of the supporting section 36. In this embodiment, for example, the metal powder and the polyester powder are set to amounts same as the amounts in the free-cutting layer 34 in the first embodiment to configure the second free-cutting layer 47b to have hardness lower than the hardness of the first free-cutting layer 47a and same as the hardness of the free-cutting layer 34.

### (Effects)

In this embodiment, in addition to an effect same as the effect in the first embodiment, an effect explained below is obtained.

In this embodiment, the free-cutting layer 47 is formed by providing the first free-cutting layer 47a having the hardness lower than the hardness of the seal fins and higher than the hardness of the free-cutting layer 34 such that the surface on the radial direction outer side of the first free-cutting layer 47a faces the gap present between the turbine rotor 12 and the inner diaphragm 19a. Therefore, while suppressing damage and the like to the seal fins, even when foreign matters having hardness higher than the hardness of the free-cutting layer 34 flow into the gap together with the leakage flow 23 and collide with the free-cutting layer 47, it is possible to suppress erosion of the free-cutting layer 47 due to the foreign matters.

### <Others>

The present invention is not limited to the embodiments explained above and includes various modifications. For example, the embodiments are explained in detail in order to clearly explain the present invention. The embodiments are not always limited to embodiments including all the components explained above. For example, a part of the components of the embodiments can be deleted.

In the illustrations in the embodiments explained above, the seal fins 33 are provided on the stationary body opposed surface 37 and the free-cutting layer 41 is provided on the segment opposed surface 42. However, the essential effect of the present invention is to provide a segment for a sealing device that can suppress strength deterioration of a turbine rotor. As long as this essential effect is obtained, it is not always necessary to provide the seal fins 33 on the stationary body opposed surface 37 and provide the free-cutting layer 41 on the segment opposed surface 42.

In the configuration illustrated in the embodiments, the groove section 39 is formed in the turbine rotor 12 and the segment 31 is pushed into the groove section 39. However, the present invention is not always limited to the configuration as long as the essential effect of the present invention is obtained. For example, a configuration may be adopted in which a recessed section is provided in the segment 31, a projecting section projecting to the radial direction outer side is provided on the outer circumferential surface of the turbine rotor 12, and the projecting section of the turbine rotor is pushed into the recessed section of the segment 31.

In the configuration illustrated in the embodiments, when viewed on the cut surface of the turbine rotor 12, the groove section 39 includes the first groove section 26 formed in the reverse T shape and the second groove section 27 formed in the rectangular shape, the base 32 includes the engaging section 35 formed in the reverse T shape and the supporting section 36 formed in the rectangular shape, and the base 32 is engaged with the groove section 39. However, the present invention is not always limited to the configuration as long as the essential effect of the present invention is obtained. For example, the groove section 39 and the base 32 may be formed in another shape such as a reverse Christmas tree shape and engaged.

In the illustrations in the embodiments, the sealing device according to the present invention is applied to the steam turbine power generation facility. However, the present invention is not always limited to the case as long as the essential effect of the present invention is obtained. An application target of the sealing device according to this embodiment is not limited to the steam turbine power generation facility and can also be applied to, for example, a gas turbine power generation facility illustrated below.

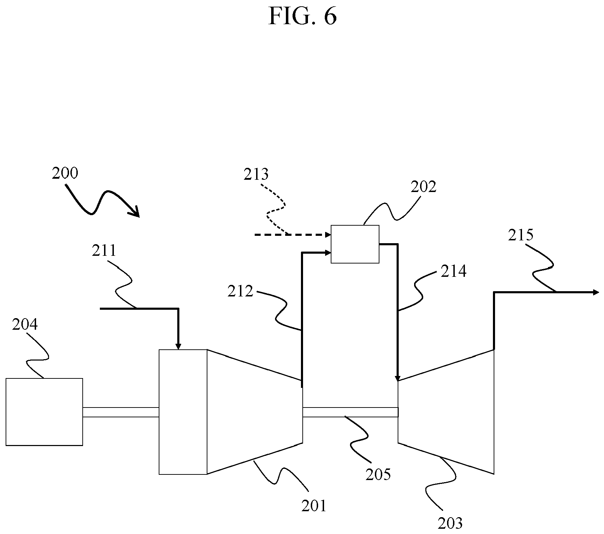

Fig. 6 is a schematic view showing an overall configuration of a configuration example of the gas turbine power generation facility. A gas turbine power generation facility 200 illustrated in Fig. 6 includes a compressor 201, a combustor 202, and a turbine 203. The compressor 201 compresses working fluid (air) 211 sucked via an air intake section (not shown in the figure) to generate high-pressure compressed air 212 and supplies the compressed air 212 to the combustor 202. The combustor 202 mixes and burns the compressed air 212 obtained from the compressor 201 and fuel 213 to generate high-temperature combustion gas 214 and supplies the combustion gas 214 to the turbine 203. The combustion gas 214 obtained from the combustor 202 expands, whereby the turbine 203 is driven. The compressor 201 is driven by power obtained by the turbine 203 and a generator 204 is driven by the remaining power to obtain electric power. The combustion gas 214 that has driven the turbine 203 is discharged from the turbine 203 as exhaust gas 215. The compressor 201, the turbine 203, and the generator 204 are coupled to one another by a rotating shaft 205. Note that the sealing device according to the present invention can also be applied to, besides the power generation facility, for example, a configuration in which a pump is connected to a gas turbine as a load apparatus.

The above specification as well as the claims and the drawings disclose multiple features of the invention in specific combinations. The skilled person will combine these features in various ways to obtain other combinations or sub-combinations of the features in order to adapt the invention as defined in the claims to his specific needs.

## Claims

1. A segment for a sealing device (31) used in a sealing device (28) provided between a turbine rotor (12) and a stationary body (14) that covers the turbine rotor (12), **characterized in that** the segment for the sealing device (31) comprising:
a base (32) that engages with the turbine rotor (12); and
a free-cutting layer (34) that covers a stationary body opposed surface (37), which is a surface of the base opposed to the stationary body (14).

2. The segment for the sealing device (31) according to claim 1, wherein the base (32) includes a projecting section (43) that engages with a groove section (39) formed in the turbine rotor (12).

3. The segment for the sealing device (31) according to claim 1 or 2, comprising seal fins (33) provided on the stationary body opposed surface (37) and extending toward the stationary body (14), wherein
the free-cutting layer (34) covers a portion excluding the seal fins (33) on the stationary body opposed surface (37).

4. The segment for the sealing device (31) according to claim 3, wherein
the free-cutting layer (47) includes a first free-cutting layer (47a) having hardness lower than hardness of the seal fins (33) and a second free-cutting layer (47b) having hardness lower than the hardness of the first free-cutting layer (47a), and
the first free-cutting layer (47a) is stacked on a radial direction outer side of the second free-cutting layer (47b).

5. A turbine rotor comprising the segment for the sealing device (31) according to one of the preceding claims, wherein
a plurality of the segments for the sealing device are provided along a rotating direction.

6. A turbine (9) comprising:
the turbine rotor (12) according to claim 5; and
a stationary body (14) that covers the turbine rotor (12), second seal fins (40) extending toward the free-cutting layer (34) being provided in the stationary body (14).
